# EUROPÄISCHE PATENTANMELDUNG

(11) **EP 1 674 190 A1**
(43) Veröffentlichungstag der Anmeldung: **28.06.2006**
(21) Anmeldenummer: 05027515.5
(22) Anmeldetag: 15.12.2005
(51) Int. Cl.: B23K 26/14, B23K 26/42

(54) **Verfahren zum Laserstrahlschweissen und Laserstrahlhartlöten von Aluminium und Aluminiumlegierungen**

(30) Priorität: 21.12.2004 DE 102004061571
(71) Anmelder: Linde Aktiengesellschaft, 65189 Wiesbaden (DE)
(72) Erfinder: Ammann, Thomas, 81379 München (DE); Danzer, Wolfgang, 84405 Dorfen (DE)

(57) **Zusammenfassung**

Die Erfindung betrifft ein Verfahren zum Laserstrahlschweißen und Laserstrahlhartlöten von Aluminium und Aluminiumlegierungen, bei dem ein von einem Prozessgas (2) ummantelter Laserstrahl (1) auf ein Werkstück (3) gelenkt wird, wobei das Prozessgas im Wirkungsbereich des Laserstrahls ein Plasma aus Kationen und Elektronen bildet. Erfindungsgemäß werden die Kationen in einem elektrischen Feld in Richtung des Werkstücks beschleunigt und reinigen die Werkstückoberfläche. Dadurch wird die Oxidhaut (6), die an der Oberfläche von Aluminium und Aluminiumlegierungen entsteht, entfernt.

## Beschreibung

Die Erfindung betrifft ein Verfahren zum Laserstrahlschweißen oder Laserstrahlhartlöten von Aluminium und Aluminiumlegierungen, bei dem ein von einem Prozessgas ummantelter Laserstrahl auf ein Werkstück gelenkt wird, wobei das Prozessgas im Wirkungsbereich des Laserstrahls ein Plasma aus Kationen und Elektronen bildet.

Beim Laserschweißen wird im,Werkstück mit einem Laserstrahl Material geschmolzen und nach dem Erstarren des geschmolzenen Materials bildet sich eine stoffschlüssige Verbindung aus. Der Laserstrahl dringt aufgrund seiner hohen Energiedichte weit in das Werkstück ein. Dadurch entstehen beim Laserschweißen sehr schlanke Schweißnähte und es sind sehr hohe Schweißgeschwindigkeiten möglich. Beim Eindringen in das Werkstück bildet sich eine Dampfkapillare aus verdampfendem Werkstückmaterial aus. Das verdampfte Werkstückmaterial wird bei entsprechend hoher Energiedichte des Laserstrahls ionisiert. Die Dampfkapillare wird als Keyhole bezeichnet. Bei Verwendung eines Prozessgases ionisiert dieses unter der Einwirkung des Laserstrahls. Es bildet sich aus dem Prozessgas ein sog. Plasma aus. Das Plasma dringt über das Keyhole weit in das Werkstück ein und gibt einen großen Teil seiner Energie an das umliegende Werkstückmaterial ab, so dass dieses unter indirektem Lasereinfluss stehende Material schmilzt. Aus dieser Schmelze bildet sich schließlich die stoffschlüssige Verbindung.

Beim Schweißen von Aluminium und Aluminiumlegierungen treten aufgrund der spezifischen physikalischen Materialeigenschaften spezielle Probleme auf. Da es sich bei Aluminium um ein unedles Metall handelt, entsteht bei Aluminiumwerkstoffen auf der Oberfläche eine festhaftende Oxidschicht mit der Zusammensetzung Al₂O₃. Diese Oxidhaut mit amorpher Struktur ist nur einige tausendstel Mikrometer dick und entsteht innerhalb von wenigen Minuten. Ein weiterer Kontakt mit der Umgebung lässt die Oxidschichten langsam auf Dicken von bis zu hundertstel Mikrometer anwachsen. Beim Schweißen wirkt sich die Oxidhaut nachteilig aus. Die Oxidhaut ist schwerer als der Aluminiumwerkstoff und kann zu Einschlüssen führen. Ferner ist die Oxidschicht hygroskopisch und bindet deshalb leicht Feuchtigkeit ein. Feuchtigkeit, die im Schweißbereich zu Wasserstoff zerfällt, führt zu Poren und damit zu qualitativ minderwertigen Schweißverbindungen. Dabei ist die Porenbildung aufgrund von Feuchtigkeit insbesondere beim Schweißen von Aluminium ein Problem, da es aufgrund des Sprungs in der Wasserstofflöslichkeit am Schmelzpunkt von Aluminium zu Wasserstoffeinschlüssen und damit zu Poren kommt.

Beim Laserstrahlhartlöten wird im Gegensatz zum Schweißen mit dem Laserstrahl nur das Zusatzmaterial aufgeschmolzen, nicht jedoch der Grundwerkstoff. Deshalb liegt auch die Schmelztemperatur des Zusatzwerkstoffes stets unterhalb der Schmelztemperatur des Grundwerkstoffes. Die Verbindung entsteht durch Wechselwirkung des geschmolzenen Zusatzwerkstoffes mit dem Grundwerkstoff. Auch beim Laserstrahlhartlöten verursacht - wie beim Laserstrahlschweißen - die in die Oxidhaut des Aluminiums eingebundene Feuchtigkeit Poren und führt damit zu qualitativ minderwertigen Verbindungen.

Beim Metall-Schutzgas-Schweißen von Aluminium und Aluminiumlegierungen gibt es mehrere Vorgehensweisen die Porenbildung zu unterbinden. Eine häufig verwendete Methode ist es, die Oxidschicht vor dem Schweißvorgang mechanisch zu entfernen. Dabei wird die Oxidhaut durch Bürsten entfernt, wobei die Borsten eine schabende Wirkung aufweisen müssen. In vielen Fällen ist es bereits ausreichend die Feuchtigkeit, die von der hygroskopischen Oxidschicht an der Oberfläche gebunden ist, im Bearbeitungsbereich zu entfernen. Dies geschieht, indem der Bearbeitungsbereich mit einer Autogenflamme getrocknet wird. Weiterhin ist es beim Metall-Schutzgas-Schweißen möglich, die Oberfläche durch eine entsprechende Polung der Schweißelektrode von der Oxidschicht zu befreien. Dazu wird die Elektrode positiv und das Werkstück negativ gepolt. Im Wirkungsbereich des Lichtbogens wird das Schutzgas ionisiert und es entstehen freie Elektronen und Kationen. Die Kationen werden von der positiven Elektrode weg zum negativ gepolten Werkstück hin beschleunigt. Beim Auftreffen auf das Werkstück reinigen die Ionen die Werkstückoberfläche von Oxidhaut und Feuchtigkeit.

Der Erfindung liegt die Aufgabe zugrunde, ein Verfahren anzugeben, welches das Nahtaussehen und die Qualität des Laserschweißens von Aluminium und Aluminiumlegierungen verbessert. Insbesondere soll mit dem Verfahren die Porenbildung unterbunden werden. Ferner soll mit dem Verfahren auch Laserhartlöten von Aluminium und Aluminiumlegierungen mit hoher Qualität ermöglicht werden.

Die Aufgabe wird erfindungsgemäß dadurch gelöst, dass die Kationen in einem elektrischen Feld in Richtung des Werkstücks beschleunigt werden und die Werkstückoberfläche reinigen. Durch die Beschleunigung in dem elektrischen Feld haben die Kationen beim Auftreffen auf das Werkstück genügend Kraft die Werkstückoberfläche zu reinigen. Entfernt oder zumindest entscheidend vermindert werden dabei neben Verunreinigungen Feuchtigkeit und Oxidschicht. Da Einschlüsse und Poren beim Schweißen und Löten von Aluminium und Aluminiumlegierungen sehr häufig auf Feuchtigkeit und Oxidhaut an der Werkstückoberfläche zurückzuführen sind, werden diese Ursachen für Schweiß- oder Lötfehler mit dem erfindungsgemäßen Verfahren nahezu vollständig ausgeschlossen. Dadurch verbessert sich die Qualität der Schweiß- und Lotverbindung entscheidend. Weiterhin ist von Vorteil, dass die Kationen den Bearbeitungsbereich zum Bearbeitungszeitpunkt reinigen. Damit wird ausgeschlossen, dass zwischen Reinigung und Schweiß- oder Lotvorgang es erneut zur Oxidbildung kommt oder sich Verunreinigungen oder Feuchtigkeit anlagern. Ferner führt das erfindungsgemäße Verfahren zu vorteilhaftem Nahtaussehen, da eine Reinigung des gesamten Schweißbereichs erfolgt. Das ionisierte Prozessgas entfernt Verunreinigungen und Oxidhaut beim Auftreffen auf die Werkstückoberfläche, wobei nicht nur die Stelle, auf welche der Laserstrahl auftrifft sondem auch ein schmaler Bereich daneben von den Kationen gereinigt wird. Es wird somit auch der Bereich, in welchem beim Schweißen die Schmelze entsteht, sowie der direkt an die Schmelze angrenzende Bereich gereinigt. Beim Löten wird der gesamte Bereich um die entstehende Verbindung gereinigt, so dass eine Wechselwirkung von im Laserstrahl freigesetzten Verunreinigungen oder Wasserstoff mit dem geschmolzenen Zusatzwerkstoff verhindert wird. Die stoffschlüssige Verbindung bildet sich folglich im gereinigten Bereich ohne den störenden Einfluss von Verunreinigungen aus.

Vorteilhafterweise wird die Werkstoffoberfläche im Schweiß- oder Lötbereich von ihrer Oxidhaut gereinigt. Da Schweiß- und Lötfehler und Porenbildung größtenteils durch die Bestandteile der Oxidhaut entstehen, werden diese durch die Entfernung der Oxidhaut vermieden und es bilden sich qualitativ hochwertige Schweißverbindungen aus.

Mit Vorteil wird das elektrische Feld zwischen Prozessgasdüse und Werkstück angelegt. Diese Ausgestaltung ist besonders einfach zu erhalten und zusätzliche Vorrichtungen sind nicht notwendig.

In vorteilhafter Ausgestaltung der Erfindung wird das elektrische Feld zwischen einer ringförmigen, den Laserstrahl umschließenden Anordnung und dem Werkstück angelegt. Die ringförmige Anordnung wird dabei vorteilhafterweise als Ringelektrode zwischen Prozessgasdüse und Werkstück eingeführt. Sie kann jedoch auch direkt an die Prozessgasdüse angebracht werden, wobei dann Prozessgasdüse und Ringelektrode elektrisch isoliert sind. Es auch denkbar, eine andere zusätzliche Einrichtung zur Erzeugung des elektrischen Felds anzubringen.

In vorteilhafter Ausgestaltung der Erfindung wird das Werkstück negativ gepolt. Zu einem negativ geladenen Werkstück werden die positiven Kationen beschleunigt. Folglich treffen die Kationen mit der aus der Beschleunigung resultierenden Kraft auf die Werkstückoberfläche und reinigen diese besonders effektiv.

In einer anderen vorteilhaften Ausgestaltung wird ein alternierendes elektrisches Feld angelegt. Auch in einem alternierenden elektrischen Feld treffen beschleunigte Kationen auf die Werkstückoberfläche und führen zu dem gewünschten Reinigungseffekt.

Als Prozessgas werden mit besonderen Vorteilen Argon, Helium oder Argon-Helium-Gemische verwendet. Helium sorgt dabei als sehr leichtes Gas, welches tief in das Keyhole eindringt, dafür, dass der über das Plasma erfolgende Energietransport auch bis weit in das Werkstück bis an den Keyholegrund hin stattfindet. Argon dient in erster Linie zur Abschirmung gegenüber der Umgebung und vermeidet damit unkontrollierte Plasmabildung aus Luft und Luftfeuchtigkeit.

In vorteilhaften Ausgestaltungen wird als Prozessgas eine Gasmischung, die aus Argon oder aus Argon und Helium und weiterhin aus Kohlendioxid, Sauerstoff oder/und Stickstoff besteht, verwendet.

Mit besonderen Vorteilen wird das elektrisches Feld mit einer Spannung von weniger als 500 V, vorzugsweise von weniger als 300 V, besonders bevorzugt von weniger als 100 V aufgebaut wird. Damit ein elektrisches Feld aufgebaut wird, ist eine Spannung von mindestens 3 V, vorzugsweise von mindestens 5 V anzulegen. Auch Spannungen im Bereich von 10 bis 50 V führen zu elektrischen Feldern, bei denen sich die erfindungsgemäßen Vorteile einstellen.

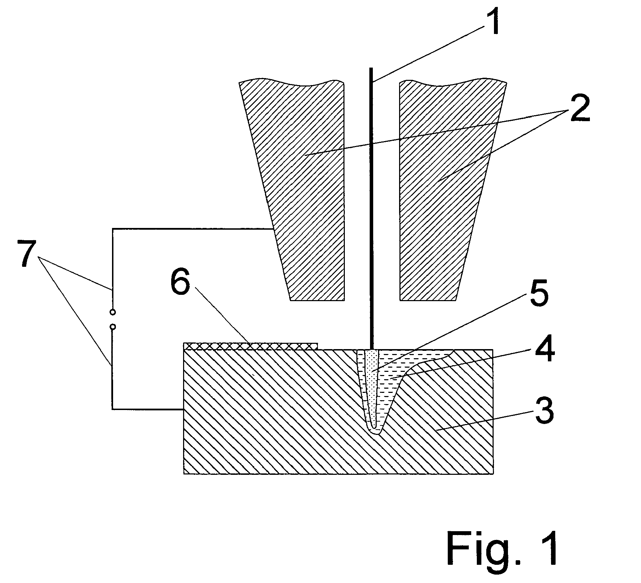

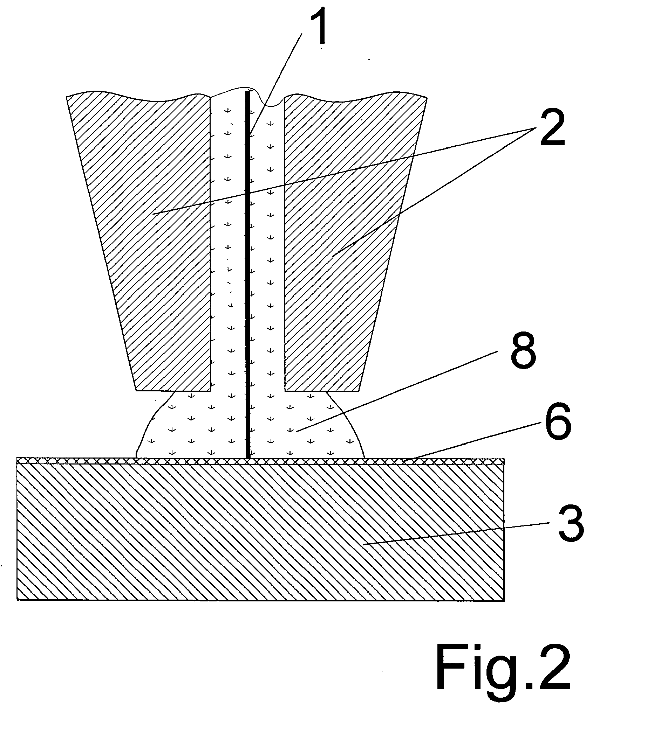

Im Folgenden soll die Erfindung anhand von Figur 1 in einer beispielhaften Ausgestaltung näher erläutert werden. Figur 2 zeigt dazu schematisch den Einwirkungsbereich der Kationen auf die Werkstoffoberfläche.

Zum Laserstrahlschweißen wird, wie Figur 1 zeigt, ein Laserstrahl 1 auf ein Werkstück 3 gelenkt. Das Werkstück 3 ist aus einem Aluminiumwerkstoff und die Oberfläche ist von einer Oxidhaut 6 überzogen. Der Laserstrahl 1 wird von einer Prozessgasdüse 2 ummantelt, die ein Prozessgas auf das Werkstück 3 lenkt. An der Schweißstelle entsteht im Werkstück 3 eine Schmelze 4 und ein Keyhole 5. Die Schmelze 4 besteht aus geschmolzenem Werkstück-Material, welches schließlich die Schweißnaht ausbildet. Das Keyhole 5 bildet sich im Material in der unmittelbaren Umgebung des Laserstrahls 1 aus. Im Wirkungsbereich des Laserstrahls 1 wird das aus der Prozessgasdüse 2 in Richtung Werkstück 3 strömende Prozessgas ionisiert und es entstehen freie Elektronen und positive Kationen. Erfindungsgemäß wird nun zwischen Prozessgasdüse 2 und Werkstück 3 ein elektrisches Feld angelegt, wobei das Werkstück 3 negativ und die Prozessgasdüse 2 positiv gepolt werden. In dem elektrischen Feld werden nun die freien Elektronen in Richtung Prozessgasdüse 2 und die Kationen in Richtung Werkstück 3 beschleunigt. Beim Auftreffen der Kationen auf die Werkstückoberfläche wird die Oxidhaut 6 von den Kationen aufgebrochen. Die Kationen entfernen die Oxidhaut 6 und reinigen die Werkstückoberfläche von Verunreinigungen und Feuchtigkeit.

In Figur 2 ist der Wirkungsbereich der Kationen skizziert. Laserstrahl 1 und Prozessgas werden über eine Prozessgasdüse 2 an die Bearbeitungsstelle geleitet. Das Prozessgas besteht aus einer Mischung von Gasatomen (u.U. auch Gasmolekülen), die im Wirkungsbereich des Laserstrahls 1 ionisiert (und gegebenenfalls vorher dissoziiert) werden. Nach dem Austritt aus der Düse strömt das ionisierte Prozessgas in Richtung Werkstück 3. Der Wirkungsbereich des Laserstrahls 1, in welchem Kationen und freie Elektronen gebildet werden, umfasst in etwa den mit der Bezugsziffer 8 gekennzeichneten Bereich. Die Kationen werden in dem elektrischen Feld zum Werkstück 3 beschleunigt und lösen die Oxidhaut 6.

Durch das erfindungsgemäße Verfahren wird die Oberfläche eines Werkstücks aus Aluminium oder einer Aluminiumlegierung von der Oxidschicht gereinigt. Diese Reinigung führt zu einer Qualitätssteigerung beim Laserschweißen und Laserlöten von Aluminium und Aluminiumlegierungen.

### Bezugszeichenliste

- 1: Laserstrahl
- 2: Prozessgasdüse
- 3: Werkstück
- 4: Schmelze
- 5: Keyhole
- 6: Oxidhaut
- 7: Spannungspotential für das elektrische Feld
- 8: Wirkungsbereich des Laserstrahls

## Patentansprüche

1. Verfahren zum Laserstrahlschweißen und Laserstrahlhartlöten von Aluminium und Aluminiumlegierungen, bei dem ein von einem Prozessgas ummantelter Laserstrahl (1) auf ein Werkstück (3) gelenkt wird, wobei das Prozessgas im Wirkungsbereich des Laserstrahls ein Plasma aus Kationen und Elektronen bildet, **dadurch gekennzeichnet, dass** die Kationen in einem elektrischen Feld (7) in Richtung des Werkstücks beschleunigt werden und die Werkstückoberfläche reinigen.

2. Verfahren nach Anspruch 1, **dadurch gekennzeichnet, dass** die Werkstoffoberfläche im Schweiß- oder Lötbereich von ihrer Oxidhaut (6) gereinigt wird.

3. Verfahren nach Anspruch 1 oder 2, **dadurch gekennzeichnet, dass** das elektrische Feld zwischen Prozessgasdüse (2) und Werkstück (3) angelegt wird.

4. Verfahren nach einem der Ansprüche 1 bis 3, **dadurch gekennzeichnet, dass** das elektrische Feld zwischen einer ringförmigen, den Laserstrahl umschließenden Anordnung und dem Werkstück angelegt wird.

5. Verfahren nach einem der Ansprüche 1 bis 4, **dadurch gekennzeichnet, dass** das Werkstück negativ gepolt wird.

6. Verfahren nach einem der Ansprüche 1 bis 4, **dadurch gekennzeichnet, dass** ein alternierendes elektrisches Feld angelegt wird.

7. Verfahren nach einem der Ansprüche 1 bis 6, **dadurch gekennzeichnet, dass** als Prozessgas Argon, Helium oder Argon-Helium-Gemische verwendet werden.

8. Verfahren nach einem der Ansprüche 1 bis 6, **dadurch gekennzeichnet, dass** als Prozessgas eine Gasmischung, die aus Argon oder aus Argon und Helium und weiterhin aus Kohlendioxid, Sauerstoff oder/und Stickstoff besteht, verwendet wird.

9. Verfahren nach einem der Ansprüche 1 bis 8, **dadurch gekennzeichnet, dass** das elektrische Feld mit einer Spannung von weniger als 500 V, vorzugsweise von weniger als 300 V, besonders bevorzugt von weniger als 100 V aufgebaut wird.
